**Europäisches Patentamt**

**European Patent Office**

**Office européen des brevets**

(19)

(11) Veröffentlichungsnummer: **0 106 221**
**A2**

(12) ## EUROPÄISCHE PATENTANMELDUNG

(21) Anmeldenummer: 83109620.1

(22) Anmeldetag: 27.09.83

(51) Int. Cl.³: **C 10 G 49/02**
**B 01 J 21/18**

(30) Priorität: 19.10.82 DE 3238689

(43) Veröffentlichungstag der Anmeldung:
25.04.84 Patentblatt 84/17

(84) Benannte Vertragsstaaten:
AT DE GB IT NL SE

(71) Anmelder: Rheinische Braunkohlenwerke AG.
Stüttgenweg 2
D-5000 Köln 41(DE)

(72) Erfinder: Giehr, Axel, Dr.
Zeisigweg 1
D-5047 Wesseling(DE)

(72) Erfinder: Dolkemeyer, Wilfried, Dr.-Ing.
Liebigstrasse 14
D-5047 Wesseling(DE)

(72) Erfinder: Lenz, Uwe, Dr. rer.nat.
Heideweg 7
D-5020 Frechen(DE)

(72) Erfinder: Boecker, Dietrich, Dr.-Ing.
Goethestrasse 25
D-5040 Brühl(DE)

(72) Erfinder: Ritter, Günter, Dr.-Ing.
Goethestrasse 29
D-5040 Brühl(DE)

(74) Vertreter: Koepsell, Helmut, Dipl.-Ing.
Mittelstrasse 7
D-5000 Köln 1(DE)

(54) Verfahren zum Hydrieren von Schwer- und Rückstandsölen und dafür verwendete Katalysatoren.

(57) Die Erfindung betrifft eine Verfahren zum katalytischen Behandeln von Schwer- und Rückstandsölen mit Wasserstoff unter Verwendung von Stäuben als Katalysator, die bei der hydrierenden Vergasung von Kohle anfallen (HKV-Staub: *Hydrierende Kohle-Vergasung*), wobei diese Stäube selbst als Katalysator verwendet werden können oder als Katalysatorträger für ein Metall und/oder dessen Verbindungen.

EP 0 106 221 A2

Rheinische Braunkohlenwerke AG.

Verfahren zum Hydrieren von Schwer- und Rückstandsölen und dafür verwendete Katalysatoren

Die Erfindung betrifft ein Verfahren zum katalytischen Behandeln von Schwer- und Rückstandsölen mit Wasserstoff unter Verwendung von Stäuben als Katalysator, die bei der hydrierenden Vergasung von Kohle anfallen (HKV-Staub: Hydrierede Kohle-Vergasung), wobei diese Stäube selbst als Katalysator verwendet werden können, oder als Katalysator-Träger für ein Metall und/oder dessen Verbindungen.

An Katalysatoren für die Hydrierung schwerer Öle, zu denen Destillationsrückstände aus der Erdölverarbeitung, aber auch Öle aus der Schieferöl- und Teersandverarbeitung gehören sowie sonstige fossile Rohstoffe und aus diesen gewonnene Öle, werden insbesondere folgende Anforderungen gestellt: Sie sollen Materialien sein, die nicht nach erfolgter Hydrierung zurückgewonnen werden müssen, sondern aufgrund ihres geringen Preises verworfen werden können, sie sollen verkippbar sein, ohne Umweltschäden zu verursachen und sie sollen insbesondere hohe katalytische Aktivität besitzen.

Für die sogenannte Sumpfphasehydrierung schwerer Öle sind bereits Katalysatoren beschrieben worden, die diese Anforderungen in, wenn auch noch nicht zufriedenstellendem Umfang, genügen. So beschreibt z. B. Krönig in seinem Buch "Die katalytische Druckhydrierung von Kohlen, Teeren und Mineralölen", Springer Verlag Berlin, Göttingen, Heidelberg,

1950, Seite 79, Zeilen 13 und 14: "Als besonders geeigneter (Katalysator-) Träger hat sich aktivierte Braunkohlengrude (bei der Ölhydrierung) erwiesen ...".

Auf der gleichen Seite, Zeilen 25-29 heißt es: "Den günstigsten Effekt gibt eine in längerer Einwirkungszeit bei 900° C mit Wasserdampf aktivierte Grude; ausreichend ist aber schon die Aktivierung, die Braunkohle oder Braunkohlengrude bei der staubförmigen Vergasung - z. B. in Winkler Generatoren (damaliger Niederdruck-Winkler-Generator) - erhält (Winklerstaub) ...", wobei jedoch eine Fahrweise des Winkler-Generators auf relativ geringen Ausbrand (hoher verbleibender Kohlenstoffgehalt) erforderlich ist, also eine an sich unwirtschaftliche Fahrweise.

Beim Fehlen von Grude aus Winkler-Generatoren mußte der Katalysatorträger (A-Kohle) besonders hergestellt werden, wofür beispielsweise ein sogenanntes CIPA-Verfahren genannt wird, nach dem die Aktivierung von feinkörnigem, kohlenstoffhaltigem Material wie beim Winkler-Generator im schwebenden Zustand mit Luft und Wasserdampf bei Temperaturen um 900° C erfolgt. Als weiterer mögicher Katalysatorträger wird schließlich normale Braunkohlen-Schwelgrude angeführt (gleiche Seite, Zeilen 33-40), wobei jedoch schlechtere Ergebnisse erhalten wurden.

Auf der folgenden Seite 80 seines Buches gibt Krönig sodann an (Zeilen 6-8), daß das auf die Grude imprägnierte Metall-(Eisen-)sulfat mit Natronlauge umzusetzen sei. Schließlich wird angegeben, daß für die Wirksamkeit des "Katalysators" dessen Feinmahlung wichtig sei, wobei der trocken grob vorgemahlene Katalysator in (möglichst asphaltfreiem) Öl zu einem Katalysatorbrei feingemahlen werden soll (Zeile 15).

...

0106221

- 3 -

Dieser Stand der Technik lehrt also, daß der bei der Vergasung oder Verschwelung erhaltene Braunkohlenkoks mit Wasserdampf und (Luft-) Sauerstoff aktiviert werden muß oder, falls Braunkohlengrude (Winklerstaub) verwendet wird, auf relativ geringen Ausbrand im Winkler-Generator gefahren werden muß, um auf iese Weise einen für die (Schwer-) Ölhydrierung brauchbaren Katalysator bzw. Katalysatorträger zu gewinnen.

Abgesehen davon, daß aus der Winkler-Vergasung mit relativ geringem Ausband erzeugte Braunkohlengrude (Winklerstaub) nicht in ausreichenden Mengen zur Verfügung steht, da aus wirtschaftlichen Erwägungen die Vergasungsprozesse nach dem Winkler-Verfahren auf eine möglichst vollständige Vergasung der eingesetzten Braunkohle gerichtet sind, hat es sich auch gezeigt, daß das Aktivieren des Braunkohlenkokses mit Wasserdampf sehr aufwendig und teuer ist, nicht zuletzt wegen der relativ langen Einwirkungszeit und hohen Temperaturen.

Der Erfindung liegt daher die Aufgabe zugrunde, die bekannten Katalysatoren und Katalysatorträger durch ausreichend verfügbare und noch wirksamere Katalysatoren bzw. Katalysatorträger zu ersetzen.

Überraschenderweise hat sich gezeigt, daß Stäube, die bei der hydrierenden Vergasung von Kohle anfallen, in vom Fachmann unvorhersehbarem Ausmaß diese Anforderungen erfüllen. Mit diesen Stäuben werden bereits ohne katalytisch wirksame Zusätze von Metallen bzw. deren Verbindungen und insbesondere bei Zusatz von solchen Metallen bzw. deren Verbindungen die gewünschten niedrig siedenden Produkte in einer Menge erhalten und Umsätze erreicht, wie sie bisher noch dem Stande der Technik unbekannt waren.

Unter der hydrierenden Vergasung von Kohle versteht man die direkte Umwandlung von Kohle in bei Normalbedingungen gasförmige Kohlenwasserstoffe, insbesondere Methan durch Behandlung der Kohle mit Wasserstoff.

Die hydrierende Vergasung ist ein Druckvergasungs-Verfahren, bei dem Kohle bei 80-100 bar und Temperaturen von 800-1000° C mit Wasserstoff umgesetzt wird.

Diese technische Neuentwicklung wird von der Anmelderin in einer halbtechnischen Versuchsanlage betrieben, wobei Braunkohle als Einsatzprodukt dient (sh. z.B. H. Teggers, K.-A. Theis, L. Schrader, Erdöl und Kohle-Erdgas-Petrochemie vereinigt mit Brennstoffchemie, Bd. 35, Heft 4, April 1982, S. 181-184), jedoch auch bei Einsatz anderer Kohlearten erhält man die erfindungsgemäßen Katalysatoren.

Bei dem eingesetzten Wasserstoff kann es sich um reinen Wasserstoff handeln; jedoch auch technischer Wasserstoff, der noch CO und $CO_2$ enthält, kann mit Erfolg eingesetzt werden.

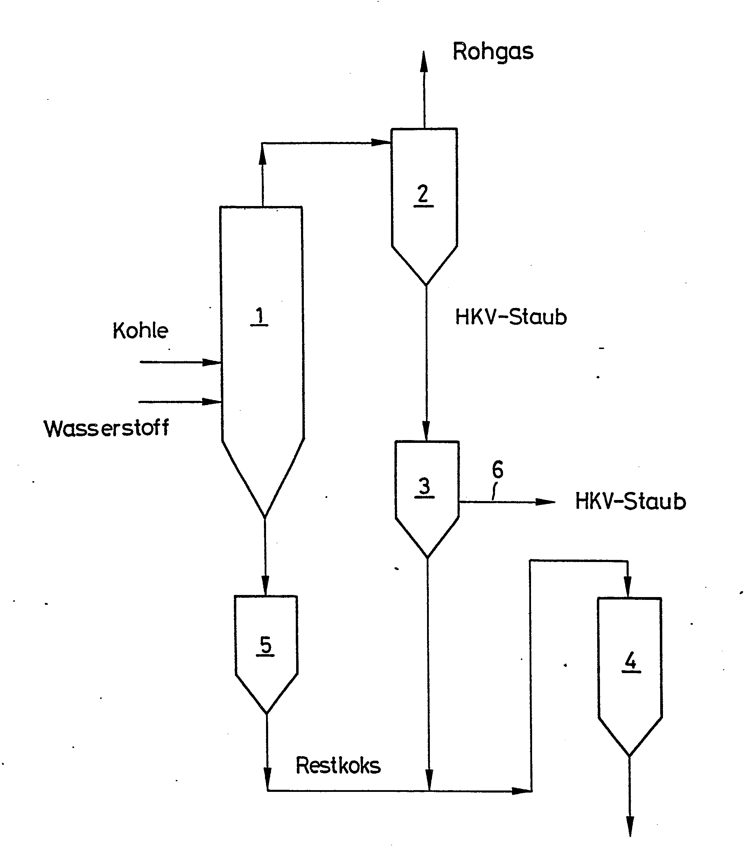

Die Figur zeigt, daß das aus dem Reaktor 1 über Kopf strömende Rohgas in einen Zyklon 2 gelangt, wo mitgerissene Stäube bzw. staubförmiger Restkoks vom Rohgas getrennt werden.

...

Der Staub gelangt über die Staubschleuse 3 in den Restkoksbunker 4 zusammen mit über die Restkoksschleuse 5 ausgeschleustem Restkoks. Der Zyklonstaub kann jedoch auch über 6 direkt abgezogen werden.

Es wurde überraschend gefunden, daß sowohl der Staub als auch der üblicherweise in weniger feiner Verteilung vorliegende Restkoks allein sowie in Gemischen aufgrund ihrer durch das hydrierende Vergasungsverfahren bedingten Eigenschaften, insbesondere der unter diesen bei hohen Temperaturen und Drücken unter hydrierenden Bedingungen erfolgten Bildung hervorragende Katalysatoreigenschaften besitzen. Obgleich keine exakten Kenntnisse über die katalytisch wirksamen Zentren dieses Katalysators vorliegen, muß angenommen werden, daß für die Anlagerung und Übertragung von Wasserstoff, wie sie für die Hydrierung schwerer Öle von Bedeutung ist, besonders aktive Zentren vorliegen. Verbessert werden kann naturgemäß die katalytische Wirksamkeit des Restkokses durch Feinmahlung.

Obgleich Porenvolumen und Porenradien des Katalysators die besonders günstigen Eigenschaften nicht ausreichend erklären, wird auch aus diesen Daten, wie Tabelle 1 zeigt, die Eignung der erfindungsgemäßen Katalysatoren für die Hydrierung schwerer Öle deutlich.

Tabelle 1

| | |
|---|---|
| Spez. Oberfläche | $> 200 \ m^2/g$ |
| Porenvolumen | 67 % (beispielhaft) |
| 50 % des Porenvolumens besitzen Porenradien | $1900 \cdot 10^{-10} m$ |
| Wassergehalt | $<$ 1 Gew. % |
| Aschegehalt | 2-70 Gew. % (wasserfrei) |
| C-Gehalt | 20-90 Gew. % (wasserfrei) |
| Sauerstoffgehalt | 1- 5 Gew. % (wasserfrei) |

...

Die Erhöhung der katalytischen Aktivität von dem Stand der Technik entsprechenden Katalysatoren durch Behandeln derselben mit Metallen bzw. deren Verbindungen ist, wie eingangs erläutert, bekannt. Es hat sich gezeigt, daß die erfindungsgemäßen Katalysatoren bisher unerreichte Trägereigenschaften besitzen. Insbesondere durch Aufbringen von Eisen bzw. dessen Salzen, wobei Eisensulfat bevorzugt ist, werden hervorragende Katalysatoren erhalten. Aber auch andere katalytisch wirksame Metalle, z. B. Mo, W, Ni, Co führen zu sehr aktiven Katalysatoren, wenn auch die Wirtschaftlichkeit durch die Kosten dieser Metalle beeinträchtigt wird und ferner die Verkippung nicht unbedenklich ist.

Ein erfindungsgemäß hergestellter Katalysator enthält z. B. 95 Gew.-Teile HKV-Staub oder HKV-Staub/Restkoks-Gemisch und 5 Gew.-Teile Eisensulfat oder äquivalente Mengen anderer Verbindungen des Eisens oder äquivalente Mengen von Verbindungen anderer Metalle wie Mo, W, Co, Ni, ferner 100 Gew.-Teile schweres Öl und soviel Natronlauge, daß ein wässriger Auszug aus dieser Mischung eine Basizität von pH 5 - pH 13 aufweist.

Die angegebenen Verhältnisse von Katalysatorträger, Metallverbindung und Schweröl können jedoch in weiten Grenzen variiert werden.

Die Herstellung der Mischung erfolgt zweckmäßigerweise so, daß HKV-Staub bzw. HKV-Staub/Restkoks-Gemische im Mischer vorgelegt werden und nach Inbetriebsetzen des Mischers die Zugabe der Metallsalzlösung durch Düsen erfolgt, um eine gleichmäßige Durchmischung zu erhalten. Anschließend kann dann die Natronlauge eingedüst werden, gefolgt vom Schwerölzusatz.

Anstelle der Sulfate der genannten Metalle können auch andere Salze bzw. Oxide bzw. Sulfide verwendet werden. Wird die obige Mischung etwa eine Stunde lang in einer Kugelmühle bei einer Temperatur von 95 °C gemahlen, liegt der Katalysator als pulvriger Feststoff mit einer Korngröße von kleiner als 0,1 mm vor. Gleichwertige Katalysatoren können auch beim Mahlen in anderen Mühlen erhalten werden.

Anstelle wässriger Natronlauge können auch andere Basen verwendet werden.

Üblicherweise werden der Staub bzw. das Staub/Restkoks-Gemisch jedoch als solche gemahlen auf eine Korngröße kleiner als 0,1 mm. Nach der Metallsalzdotierung kann dann eine Naßmahlung erfolgen auf eine Korngröße von 50 % kleiner als $30 \cdot 10^{-6}$ m.

Die Wirksamkeit der neuen Katalysatoren ist in Tabelle 2 dargestellt. Als Vergleichs-Katalysatoren dient Staub aus dem früheren Niederdruck-Winkler-Vergasungsreaktor.

Die Ergebnisse beruhen auf Hydrierungen bei 450° C von Schwer- bzw. Rückstandsölen bestehend aus 50 Gew. % eines Vakuumdestillats mit Siedebereich 350 - 500° C und 50 Gew. % eines Rückstandsöls mit Siedebereich > 500° C.

Hydrierungen mit den erfindungsgemäßen Katalysatoren können in weiten Grenzen von 380 - 500° C durchgeführt werden, wobei der Bereich von 420 - 480° C bevorzugt ist.

Bei den Vergleichsversuchen wurde bei einem Druck von 300 bar gearbeitet. Es ist jedoch dem Fachmann bekannt, daß die Hydrierungen, wie sie auch z. B. in der Sumpfphase durchgeführt wer en, in weiten Druckgrenzen variiert werden können.
Auch der eaktortyp, der zur Hydrierung verwendet wird, kann
je nach gestellten Anforderungen belibig gewählt werden.

Die Behandlung der Katalysatoren mit $FeSO_4$ erfolgte, wie auf
Seite 9 angegeben.

Tabelle 2

| Versuchs-Nr. | Katalysator | Produkte in Gew. % | | | relativer Durchsatz |
|---|---|---|---|---|---|
| | | Gas | Destillat | Rückstand > 500° C | |
| 1 | -- | 5 | 70 | 25 | 1,0 |
| 2 | Niederdruck-Winkler-Staub (60 Gew.% C; 5 Gew.% Fe) | 6,5 | 72 | 21,5 | 1,5 |
| 3 | Niederdruck-Winkler-Staub wie uner 2, zusätzlich mit 5 Gew.% $FeSO_4$ behandelt) | 8 | 73 | 19 | 1,5 |
| 4 | HKV-Staub (20 Gew.% C; 2 Gew.% Fe) | 9 | 80 | 11 | 2,7 |
| 5 | *HKV-Staub (30 Gew.% C; 2 Gew.% Fe) | 9 | 80 | 11 | 2,7 |
| 6 | HKV-Staub wie unter 4, zusätzlich mit 5 Gew.% $FeSO_4$ behandelt | 7 | 84 | 9 | 3,3 |
| 7 | 50 Gew.% HKV-Staub/50 Gew.% Restkoks, gemahlen ($\lessgtr$ 40 Gew.% C, 3,5 Gew.% Fe) | 8 | 79 | 13 | 2,6 |
| 8 | wie unter 7, zusätzlich mit 5 Gew.% $FeSO_4$ behandelt | 7 | 82 | 11 | 2,8 |
| 9 | Restkoks (60 Gew.% C; 5 Gew.% Fe) | 10 | 78 | 12 | 2,5 |
| 10 | HKV-Staub, wie unter 4, mit 2,5 Gew.% Molybdän und 2,5 Gew.% Nickel dotiert | 8 | 83 | 9 | 3,4 |

*Höherer Inkohlungsgrad der in die Vergasung eingesetzten Kohle als in Nr. 4 (bzw. 6, 7, 8 und 9)

Die Tabelle zeigt die unerwartet guten Eigenschaften der erfindungsgemäßen Katalysatoren.

Im Vergleich zu dem früher angewandten Niederdruck-Winkler-Staub, bei dem ein relativ hoher Kohlenstoff-Gehalt Voraussetzung für gute Katalysatoreigenschaften war, was nur durch geringen Ausbrand der in den Winkler-Generator eingesetzten Kohle möglich war mit entsprechend unwirtschaftlicher Fahrweise, spielt bei den erfindngsgemäßen Katalysatoren der Kohlenstoffgehalt keine merkliche Rolle, wie aus den Versuchen 4, 5, 7 und 9 hervorgeht.

Besonders auffallend ist das für den Fachmann unerwartete Ergebnis, daß auch Gemische mit gemahlenem Restkoks, der unten aus dem Hydrierreaktor abgezogen wird, annähernd gleich gute Ergebnisse wie HKV-Staub allein liefern.

Von großer Bedeutung ist insbesondere das Ergebnis, daß der mit Eisensulfat behandelte HKV-Staub (Versuch 6) Destillatmengen liefert bei dem hohen relativen Durchsatz von 3,3, das bisher nicht erreicht wurde. Diese vorzüglichen Eigenschaften des Katalysators sind bei dem zunehmenden Einsatz schwerer Öle für die Gewinnung von Destillaten im Siedebereich unter 500° C von sehr großer wirtschaftlicher Bedeutung.

Auch ein Gemisch von HKV-Staub und gemahlenem Restkoks liefert nach Behandlung mit Eisensulfat gemäß Versuch 8 hervorragende Ergebnisses.

In Versuch 10 wurde ein mit $(NH_4)_2 MoO_4$ und Nickelsulfat behandelter HKV-Staub eingesetzt. Auch mit diesem Katalysator wurden ausgezeichnete Ergebnisse erhalten, insbesondere auch im Hinblick auf den erzielten relativen Durchsatz.

...

Patentansprüche:
========================================

1. Verfahren zum katalytischen Behandeln von Schwer- und Rückstandsölen mit Wasserstoff in Gegenwart von insbesondere als Träger für ein oder mehrere katalytisch aktive Metalle und/oder deren Verbindungen dienenden Stäuben und Staub/Restkoks-Gemischen, dadurch gekennzeichnet, daß Stäube und Staub/Restkoks-Gemische in Mischungsverhältnissen von 0-100 Gew.% Staub als Katalysator und/oder Katalysatorträger verwendet werden, die bei der hydrierenden Vergasung von Kohle anfallen (HKV-Staub: <u>H</u>ydrierende <u>K</u>ohle-<u>V</u>ergasung). -

2. Verfahren nach Anspruch 1, dadurch gekennzeichnet, daß der HKV-Staub und/oder das HKV-Staub/Restkoks-Gemisch mit einer Lösung von Metallverbindungen behandelt wird.

3. Verfahren nach den Ansprüchen 1 und 2, dadurch gekennzeichnet, daß der Katalysator in Konzentrationen von 0,1 -10 Gew. % bezogen auf das zu hydrierende Schwer- bzw. Rückstandsöl zugesetzt wird.

4. Verfahren nach den Ansprüchen 1 bis 3, dadurch gekennzeichnet, daß HKV-Staub und/oder HKV-Staub/Restkoks-Gemisch mit Sulfaten, Oxiden, Sulfiden und anderen Verbindungen oder Gemischen hiervon, von katalytisch aktiven Metallen, wässriger Natronlauge sowie Schweröl bzw. Rückstandsöl vermischt werden und gemahlen dem zu hydrierenden Schweröl bzw. Rückstandsöl zugesetzt werden.

5. Katalysator zum Behandeln von Schwer- und Rückstandsölen mit Wasserstoff in Gegenwart von insbesondere als Träger für ein oder mehrere katalytisch aktive Metalle und/oder deren

...

Verbindungen dienenden Stäuben und Staub/Restkoks-Gemischen, dadurch gekennzeichnet, daß Stäube und Staub/Restkoks-Gemische in Mischungsverhältnisse von 0-100 Gew. % Staub als Katalysator und/oder Katalysatorträger verwendet werden, die bei der hydrierende Vergasung von Kohle anfallen (HKV-Staub: Hydrierende Kohle-Vergasung).

Rohgas

Kohle

Wasserstoff

HKV-Staub

HKV-Staub

6

Restkoks